Europäisches Patentamt

**European Patent Office**

**Office européen des brevets**

(19)

(11) Veröffentlichungsnummer: **0 088 889**
**B1**

(12)

# EUROPÄISCHE PATENTSCHRIFT

(45) Veröffentlichungstag der Patentschrift:
**04.12.85**

(21) Anmeldenummer: **83101255.4**

(22) Anmeldetag: **10.02.83**

(51) Int. Cl.⁴: **B 60 T 17/22,** G 01 F 1/38,
H 01 H 35/24

(54) **Strömungsabhängiger Schalter.**

(30) Priorität: **16.03.82 DE 3209498**

(43) Veröffentlichungstag der Anmeldung:
**21.09.83 Patentblatt 83/38**

(45) Bekanntmachung des Hinweises auf die Patenterteilung:
**04.12.85 Patentblatt 85/49**

(84) Benannte Vertragsstaaten:
**AT CH DE FR IT LI**

(56) Entgegenhaltungen:
**DE - A - 2 553 584**
**DE - A - 3 006 279**
**DE - B - 2 358 612**
**DE - U - 1 922 088**
**GB - A - 1 358 324**

(73) Patentinhaber: **Knorr-Bremse GmbH, Moosacher Strasse 80, D-8000 München 40 (DE)**

(72) Erfinder: **Huber, Johann, Ohlmüllerstrasse 14, D-8000 München 90 (DE)**

BUNDESDRUCKEREI BERLIN

## Beschreibung

Die Erfindung bezieht sich auf einen strömungsabhängigen Schalter für Strömungsüberwacheinrichtungen an Druckluftversorgungsleitungen, insbesondere Hauptluftleitungen, von Schienenfahrzeug-Druckluftbremsen, mit einer in die im Lösezustand der Druckluftbremsen eine Regeldruckhöhe führende Druckluftversorgungsleitung eingeordneten Drosselstelle, einem Kolben, der einerseits vom vor der Drosselstelle anstehenden Druck und andererseits vom nach der Drosselstelle herrschenden Druck in der Druckluftversorgungsleitung und der Kraft einer ersten Feder belastet ist, und einem vom Kolben bei dessen überwiegender Belastung seitens des vor der Drosselstelle anstehenden Druckes mittels eines Stößels betätigbaren Schaltorgan.

Ein den vorstehenden Merkmalen entsprechender, strömungsabhängiger Schalter ist der DE-B 2 358 612 entnehmbar. Bei diesem bekannten Schalter ist der Kolben unmittelbar von der Feder belastet und der Stößel betätigt unmittelbar das als elektrischer Schalter oder als Druckluftventil ausgebildete Schaltorgan, welches in eine Steuerleitung von einer Energiequelle zu einer Überwachvorrichtung eingeschaltet ist. Bei diesen bekannten Schaltern bereitet die Justierung ihrer Ansprechschwelle, also die Abstimmung ihres Ansprechens auf bestimmte Strömungsverhältnisse in der Druckluftversorgungsleitung Schwierigkeiten; außerdem weisen diese Schalter eine beachtliche Schaltungenauigkeit auf.

Bei einem aus der DE-A 3 006 279 bekannten, strömungsabhängigen Schalter ist der Kolben als Membran ausgebildet, welche zugleich das Sperrorgan für das als Ventil ausgebildete Schaltorgan bildet. Auch dieser bekannte Schalter weist keinerlei Justiermöglichkeit und eine sich in Abhängigkeit von der Membransteifigkeit ändernde Schaltungenauigkeit auf.

Es ist Aufgabe der Erfindung, einen strömungsabhängigen Schalter der eingangs genannten Art zu schaffen, welcher bei genau festlegbaren Strömungsverhältnissen in der Druckversorgungsleitung schaltet und bei welchem das Schaltorgan stets eine genau definierte Ein- oder Ausschaltstellung, aber keine Zwischenstellung einnimmt.

Diese Aufgabe wird nach der Erfindung dadurch gelöst, daß das Schaltorgan ein in eine Verbindung von der Druckluftversorgungsleitung zu einer Schaltkammer eingeordnetes Ventil ist und daß der Druck in der Schaltkammer den Schaltkolben eines auf einen, bezogen auf die Regeldruckhöhe, niedrigen Schaltdruck eingestellten Druckwächters entgegen der Kraft einer zweiten Feder belastet. Es ergibt sich somit eine Art Vorsteuerung bzw. Verstärkung der Schaltvorgänge für den Druckwächterschalter, so daß dieser genau und stets voll durchschaltbar ist.

In den Unteransprüchen sind vorteilhafte Ausgestaltungsmöglichkeiten für den strömungsabhängigen Schalter nach der Erfindung angegeben.

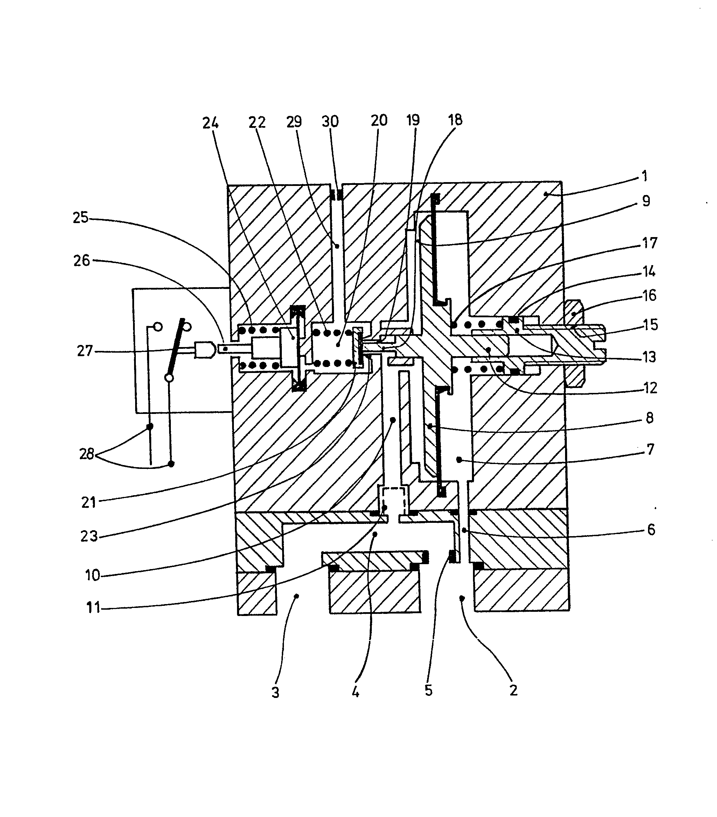

In der Zeichnung ist ein Ausführungsbeispiel eines nach der Erfindung ausgebildeten strömungsabhängigen Schalters im Schnitt dargestellt.

In eine nicht dargestellte Druckluftversorgungsleitung ist der in einem Gehäuse 1 angeordnete strömungsabhängige Schalter eingeordnet, wobei der zu einer Druckluftquelle führende Abschnitt der Druckluftversorgungsleitung an einem Rohranschluß 2 und der verbraucherseitige Abschnitt der Rohrleitung an einen Rohranschluß 3 anzuschließen ist. Insbesondere kann die Druckluftversorgungsleitung die Hauptluftleitung einer Schienenfahrzeug-Druckluftbremse sein, wobei der hauptbehälterseitige, gegebenenfalls ein Führerbremsventil aufweisende Hauptluftleitungsabschnitt um Rohranschluß 2 und der weiter zu den Bremssteuerventilen des Schienenfahrzeuges und der mit diesen gekuppelten Fahrzeuge führende Hauptluftleitungsabschnitt an den Rohrleitungsanschluß 3 anzuschließen ist. Die Rohranschlüsse 2 und 3 sind innerhalb des Gehäuses 1 durch einen Kanal 4 miteinander verbunden, in welchen eine Drosselstelle 5 eingeordnet ist. Vom Rohranschluß 2 bzw. dem Kanal 4 zweigt vor der Drosselstelle 5 ein Steuerkanal 6 ab, welcher in einen Beaufschlagungsraum 7 für einen Kolben 8 führt. Andererseits des Kolbens 8 befindet sich ein weiterer Beaufschlagungsraum 9, welcher über einen weiteren Steuerkanal 10 mit einer Stelle des Kanals 4 verbunden ist, welche in Strömungsrichtung nach der Drosselstelle 5 liegt. In die Einmündung des Steuerkanals 10 in den Kanal 4 kann ein Leitungssieb 11 eingeordnet sein. Der Kolben 8 trägt seitens des Beaufschlagungsraumes 7 einen Zapfen 12, welcher verschieblich in einer Hülse 13 gelagert ist. Die Hülse 13 ist mittels eines Dichtringes 14 abgedichtet verschieblich im Gehäuse 1 gelagert, und mittels eines Gewindeabschnittes 15 zum Gehäuse 1 einstellbar verschraubt. Eine Kontermutter 16 sichert die Hülse 13 in ihrer jeweiligen Einschraubstellung in das Gehäuse 1. Zwischen der Hülse 13 und dem Kolben 8 ist eine Schaltfeder 17 eingespannt. Seitens des Beaufschlagungsraumes 9 trägt der Kolben 8 einen Stößel 18, welcher mit Spiel in eine Gehäusedurchbrechung 19 und vom Beaufschlagungsraum 9 zu einer Schaltkammer 20 ragt und in dieser Gehäusedurchbrechung vor einer Ventildichtplatte 21 endet. Die sich in der Schaltkammer 20 befindende Ventildichtplatte 21 wird von einer ersten oder Ventilfeder 22 gegen einen gehäusefesten Ventilsitz 23 angedrückt, der die Einmündung der Gehäusedurchbrechung 19 in die Schaltkammer 20 umgibt. Die Ventilfeder 22 ist kräftiger als die Schaltfeder 17, so daß die Ventildichtplatte 21 mit einer größeren Kraft gegen den Ventilsitz 23 angedrückt wird, als der Kolben 8 in Bewegungsrichtung gegen die Ventildichtplatte 21 gedrückt wird. Die Schaltkammer 20 ist von einem Schaltkolben 24 begrenzt, der andererseits von Atmosphärendruck und der Kraft einer zweiten Feder 25 belastet ist. Der Schaltkolben 24 trägt einen Stößel 26, der in das Gehäuse eines elektrischen Schalters 27 ragt und letzteren zu schalten vermag. Der Schalter 27 ist nur schematisch dargestellt, er weist einen üblichen, hier nicht weiter interessierenden Aufbau auf und ist in einen Stromkreis 28 für ein nicht dargestelltes Schauzeichen eingeschaltet. Der Schaltkolben 24 stellt zusammen mit der Feder 25 und dem Schalter 27 einen Druckwächterschalter dar, dessen Schaltdruck durch entsprechende Dimensionierung der zweiten Feder 25 bzw. des Schaltkolbens 24 wesentlich niedriger gewählt ist als ein in der Druckluftversorgungsleitung bzw. Hauptluftleitung üblicherweise herrschender Regeldruck. Insbesondere ist die in der Hauptluftleitung bei gelösten Bremsen herrschende Druckhöhe als dieser Regeldruck anzusehen.

Von der Schaltkammer 20 führt ein Kanal 29 durch das Gehäuse 1 zur Atmosphäre; in den Kanal 29 ist eine Düse 30 eingeordnet.

Im Ruhezustand des strömungsabhängigen Schalters, wenn also in der Druckluftversorgungs- bzw. Hauptluftleitung eine bestimmte Strömungsgeschwindigkeit unterschritten wird, nehmen die Teile des strömungsabhängigen Schalters die aus der Zeichnung ersichtlichen Lagen ein. Der Kolben 8 wird dabei von der Kraft der Schaltfeder 17 und dem Druck im Beaufschlagungsraum 7 in einer durch Anlage des Stößels 18 an der Ventildichtplatte 21 definierten Stellung gehalten. Da im Beaufschlagungsraum 9 höchstens ein geringfügig niedrigerer Druck als im Beaufschlagungsraum 7 herrscht, wird diese Kolbenstellung beibehalten. Die Ventildichtplatte 21 wird von der Ventilfeder 22 dicht gegen den Ventilsitz 23 gedrückt, so daß die Gehäusedurchbrechung 19 versperrt ist. In der Schaltkammer 20 herrscht Atmosphärendruck und der Druckwächterschalter 24, 25, 27 nimmt unter der Kraft der zweiten Feder 25 seine geöffnete Schaltstellung ein.

Tritt in der Druckluftversorgungs- bzw. Hauptluftleitung eine Strömung auf, welche den bestimmten Grenzwert erreicht oder überschreitet, so ergibt sich an der Drosselstelle 5 eine zum Schalten des strömungsabhängigen Schalters ausreichende Druckdifferenz. Der vor der Drosselstelle 5 anstehende, höhere Druck beaufschlagt über den Steuerkanal 6 und den Beaufschlagungsraum 7 den Kolben 8 in Wirkungsrichtung gemäß der Zeichnung nach links, während der nach der Drosselstelle 5 herrschende, niedrigere Druck im Beaufschlagungsraum 9 ansteht. Die nunmehr merklich überwiegend nach links gerichtete Beaufschlagung des Kolbens 8 vermag diesen nach links zu verschieben, wobei der Stößel 18 die Ventildichtplatte 21 unter Kompression der Ventilfeder 22 vom Ventilsitz 23 abhebt. Aus dem Kanal 4 strömt sodann Druckluft durch den Steuerkanal 10 und die Gehäusedurchbrechung 19 in die Schaltkammer 20 ein und baut in dieser, gestaut durch die Düse 30, rasch eine beachtliche Druckhöhe auf, welche durch Beaufschlagen des Schaltkolbens 24 den Druckwächterschalter 24, 25, 27 entgegen der Kraft der zweiten Feder 25 schnell umschaltet. Der Schalter 27 schließt dabei den Stromkreis 28, so daß das nicht dargestellte Schauzeichen anspricht und die den Grenzwert übersteigende Strömung anzeigt. Diese Schaltstellung bleibt erhalten, solange die übermäßige Strömung anhält.

Beim Abklingen der Strömung unter den erwähnten Grenzwert vermögen die Beaufschlagung des Kolbens 8 durch den durch die verminderte Strömung ansteigenden Druck im Beaufschlagungsraum 9 und die Kraft der Ventilfeder 22 den Kolben 8 wieder entgegen der Kraft der Schaltfeder 17 in die dargestellte Lage zurückzudrücken, wobei sich die Ventildichtplatte 21 auf den Ventilsitz 23 aufsetzt und die Gehäusedurchbrechung 19 verschließt. Der in der Schaltkammer 20 anstehende Druck baut sich über die Düse 30 alsbald in die Atmosphäre ab und die zweite Feder 25 schaltet den Druckwächterschalter 24, 25, 27 unter Öffnen des Schalters 27 in die dargestellte Schaltlage zurück. Damit ist der Ausgangszustand wieder erreicht.

Durch Verschrauben der Hülse 13 kann die Vorspannung der Schaltfeder 17 derart justiert werden, daß der strömungsabhängige Schalter bei einer ganz bestimmten Strömung anspricht und den Schalter 27 umschaltet. Das Umschalten des Schalters 27 erfolgt dabei rasch und vollständig. Das aus dem Ventilsitz 23 und der Ventildichtplatte 21 gebildete, in Art eines Vorsteuer- bzw. Verstärkerventils für den Druckwächterschalter 24, 25, 27 wirkende Ventil kann einen kleinen Durchströmungsquerschnitt aufweisen, wodurch eine hohe Schaltgenauigkeit des strömungsabhängigen Schalters erreichbar ist.

In Abänderung zum dargestellten und beschriebenen Ausführungsbeispiel können der Kanal 29 mit der Düse 30 entfallen, wenn anstelle des Ventils 21, 23 ein Doppelventil mit Entlüftung vorgesehen wird, derart, daß das die Entlüftung überwachende Doppelventilteil im Ruhezustand des strömungsabhängigen Schalters geöffnet ist und die Entlüftung der Schaltkammer 20 zur Atmosphäre überwacht. Bei dieser Ausbildung des strömungsabhängigen Schalters wird auch ein Abblasen von Druckluft im betätigten Zustand des Schalters vermieden.

**Patentansprüche**

1. Strömungsabhängiger Schalter für Strömungsüberwacheinrichtungen an Druckluftversorgungsleitungen, insbesondere Hauptluftleitungen, von Schienenfahrzeug-Druckluftbremsen, mit einer in die im Lösezustand der Druckluftbremsen eine Regeldruckhöhe führende Druckluftversorgungsleitung eingeordneten Drosselstelle (5), einem Kolben (8), der einerseits vom vor der Drosselstelle (5) anstehenden Druck und andererseits vom nach der Drosselstelle (5) herrschenden Druck in der Druckluftversorgungsleitung und der Kraft einer ersten Feder (22) belastbar ist, und einem vom Kolben (8) bei dessen überwiegender Belastung seitens des vor der Drosselstelle (5) anstehenden Druckes mittels eines Stößels (18) betätigbaren Schaltorgan, dadurch gekennzeichnet, daß das Schaltorgan ein in eine Verbindung von der Druckluftleitungsversorgungsleitung zu einer Schaltkammer (20) eingeordnetes Ventil (21, 23) ist und daß der Druck in der Schaltkammer (20) den Schaltkolben (24) eines auf einen, bezogen auf die Regeldruckhöhe, niedrigen Schaltdruck eingestellten Druckwächterschalters (24, 25, 27) entgegen der Kraft einer zweiten Feder (25) belastet.

2. Schalter nach Anspruch 1, dadurch gekennzeichnet, daß das Ventil (21, 23) eine in der Schaltkammer (20) angeordnete Ventildichtplatte (21) aufweist, die von der ebenfalls in der Schaltkammer (20) befindlichen ersten Feder (22) in Andrückrichtung an einen gehäusefesten Ventilsitz (23) belastet ist, wobei der Ventilsitz (23) eine Gehäusedurchbrechung (19) von einem vom Druck in der Druckluftversorgungsleitung nach der Drosselstelle (5) herrschenden Beaufschlagungsraum (9) für den Kolben (8) zur Schaltkammer (20) umgibt und wobei der Stößel (18) in der Gehäusedurchbrechung (19) vor der Ventildichtplatte (21) endet.

3. Schalter nach Anspruch 2, dadurch gekennzeichnet, daß der Kolben (8) seitens seiner vom Druck in der Druckluftversorgungsleitung vor der Drosselstelle (5) beaufschlagten Seite von einer in ihrer Vorspannung vom gehäuseaußen justierbaren Schaltfeder (17) belastet ist, deren Vorspannung niedriger als die von der ersten Feder (22) auf die Ventildichtplatte (21) ausgeübte Andrückkraft ist.

4. Schalter nach einem oder mehreren der vorstehenden Ansprüche, dadurch gekennzeichnet, daß die Schaltkammer (20) über eine Düse (30) ständig mit der Atmosphäre in Verbindung steht.

## Claims

1. Air flow indicator for flow monitoring devices on compressed air supply lines, particularly main air brake pipes, for rail vehicle air brakes, comprising a throttle point (5) inserted in the compressed air supply line which carries a certain control pressure level at the air brake release position; comprising a piston (8) which can be loaded on the one hand by the pressure upstream of the throttle point (5) and on the other hand by the pressure downstream of the throttle point (5) in the compressed air supply line and by the force of a first spring (22); and comprising a switching member which can be actuated via a tappet (18) by the piston (8) in its main loading state as applied by the pressure upstream of the throttle point (5), wherein the switching member is a valve (21, 23) inserted in a connection between the compressed air supply line and a switching chamber (20), and wherein the switching piston (24) of a pressure switch (24, 25, 27) which is set to a low switching pressure relative to the control pressure level, is loaded by the pressure in the switching chamber (20) against the force of a second spring (25).

2. Air flow indicator as defined in Claim 1, wherein the valve (21, 23) has a valve sealing plate (21) arranged in the switching chamber (20), which sealing plate is loaded by the first spring (22) — likewise located in the switching chamber (20) — in the direction of contact against a valve seat (23) fixed in the housing, the said valve seat (23) encompassing an opening (19) in the housing from an admission chamber (9) for the piston (8) to the switching chamber (20), the admission chamber (9) being exposed to the pressure in the compressed air supply line downstream of the throttle point (5), and the tappet (18) ending in the opening (19) before the valve sealing plate (21).

3. Air flow indicator as defined in Claim 2, wherein, at the side exposed to the pressure in the compressed air supply line upstream of the throttle point (5), the piston (8) is loaded by a switching spring (17) whose preloading force can be adjusted from outside the housing and is lower than the contact force exerted by the first spring (22) on the valve sealing plate (21).

4. Air flow indicator as defined in one or more of the preceding Claims, wherein the switching chamber (20) communicates permanently with atmosphere through a choke (30).

## Revendications

1. Interrupteur opérant en fonction d'un écoulement pour des installations de surveillance de l'écoulement pour des conduites d'alimentation en air comprimé, en particulier pour des conduites principales, de freins à air comprimé de véhicules sur rails, comportant un point d'étranglement (5) disposé dans la conduite d'alimentation en air comprimé, dans laquelle règne un niveau de pression de réglage à l'état de desserrage des freins à air comprimé, un piston (8) qui est susceptible d'être chargé d'une part par la pression qui règne en amont du point d'étranglement et d'autre part, par la pression qui règne dans la conduite d'alimentation en air comprimé, en aval du point d'étranglement (5) et par la force d'un premier ressort (2), et un organe de commutation susceptible d'être commandé par l'intermédiaire d'un poussoir (18), par le piston (8) lors de la charge prépondérante de ce dernier par la pression qui règne en amont du point d'étranglement, caractérisé par le fait que l'organe de commutation est constitué par une soupape (21, 23) disposée dans une liaison menant de la conduite d'alimentation en air comprimé à une chambre de commutation (20), et que la pression qui règne dans la chambre de commutation (20) charge, à l'encontre de la force d'un second ressort (25), le piston de commutation (24) d'un interrupteur de surveillance de la pression (24, 25, 27), qui est réglé à une pression de commutation faible, rapportée au niveau de la pression de réglage.

2. Interrupteur selon la revendication 1, caractérisé par le fait que la soupape (21, 23) comporte un plateau d'étanchéité de soupape (21) disposé dans la chambre de commutation, et chargé, par le premier ressort (22) qui se trouve également dans la chambre de commutation, dans le sens d'application contre un siège de soupape (23) solidaire du boîtier, le siège de soupape (23) entourant une ouverture (19) du boîtier entre, d'une part, une chambre de charge (9) pour le piston, dans laquelle règne la pression de la conduite d'alimentation en air comprimé, en aval du point d'étranglement (5), et, d'autre part, la chambre de commutation (20), et le poussoir (18) se terminant dans l'ouverture (19) du boîtier, à l'avant du plateau de soupape (21).

3. Interrupteur selon la revendication 2, caractérisé par le fait que le piston (8) est chargé sur son côté qui est soumis à la pression qui règne dans la conduite d'alimentation en pression, en amont du point d'étranglement (5), par un ressort de commutation (17) ajustable, en tension préalable, de l'extérieur du boîtier, et dont la tension préalable est moindre que la force d'application exercée par le premier ressort (22) sur le plateau d'étanchéité (21) de la soupape.

4. Interrupteur selon une ou plusieurs des revendications précédentes, caractérisé par le fait que la chambre de commutation (20) est reliée en permanence avec l'atmosphère, par l'intermédiaire d'une tuyère (30).